# EUROPÄISCHE PATENTANMELDUNG

(11) **EP 1 502 820 A2**
(43) Veröffentlichungstag der Anmeldung: **02.02.2005**
(21) Anmeldenummer: 04103187.3
(22) Anmeldetag: 06.07.2004
(51) Int. Cl.: B60R 11/02, B60K 37/02

(54) **Elektronisches Fahrerinformationssystem**

(30) Priorität: 29.07.2003 DE 10334639
(71) Anmelder: SIEMENS AKTIENGESELLSCHAFT, 80333 München (DE)
(72) Erfinder: Hoehn, Wolfgang, 65428 Rüsselsheim (DE); Mayer, Klaus, 63179 Obertshausen (DE)

(57) **Zusammenfassung**

Gegenstand der Erfindung ist ein elektronisches Fahrerinformationssystem im Cockpit eines Kraftfahrzeugs zur Anzeige einer Vielzahl, nicht primärer Informationen mit einem Computer, einer Eingabeeinheit und einem Display

Um einen elektronisches Fahrerinformationssystem anzugeben, welches auch nicht kraftfahrzeugtypische Anwendungen zulässt und das bei einer Anwendung im Kraftfahrzeug fahrzeugeigene Hardwareressourcen schont und eine erstklassige Informationsdarstellung erlaubt, bilden der Computer, die Eingabeeinheit und das Display eine der Instrumententafel entnehmbare, separate Einheit, welche unter einem wegklappbaren Tachometer in die Instrumententafel eingesetzt ist.

## Beschreibung

Die Erfindung betrifft ein elektronisches Fahrerinformationssystem im Cockpit eines Kraftfahrzeugs zur Anzeige einer Vielzahl, nicht primärer Informationen mit einem Computer, einer Eingabeeinheit und einem Display.

Elektronische Fahrerinformationssysteme werden in unterschiedlicher Form in den meisten modernen Personen- und Lastkraftfahrzeugen eingesetzt. Als Eingabeeinheit dienen hierbei zum Beispiel multifunktionale, haptische Drehsteller oder Kombinationen aus Tastschaltern. Die Datenverarbeitung wird bei den Fahrerinformationssystemen von verschiedenen im Fahrzeug integrierten Computereinheiten übernommen. So gibt es zum Beispiel eine Computereinheit, die die Informationen für die Fahrzeugnavigation berechnet und eine anderer Bordrechner überwacht beispielsweise den aktuellen Kraftstoffverbrauch oder den Reifendruck. Die verschiedenen Informationen werden, bei Systemen nach dem Stand der Technik in unterschiedlichen, teilweise sehr kleinen und meist monochromen Displays angezeigt, welche oft im Tachometer angeordnet sind. Die Vielzahl der angezeigten Informationen in dem kleinen Tachometerfeld führt zu einer unübersichtlichen und schlecht ablesbaren Darstellung der Information.

Nachteilig bei diesen Lösungen ist, dass die hier eingesetzte Soft- und Hardware ausschließlich im Kraftfahrzeug genutzt werden kann und eine Vielzahl von Hardwarekomponenten benötigt wird, wobei die angezeigten Informationen oft unbefriedigend klein dargestellt werden.

Der Erfindung liegt somit die Aufgabe zugrunde ein einheitliches elektronisches Fahrerinformationssystem für ein Kraftfahrzeug schaffen, welches auch nicht kraftfahrzeugtypische Anwendungen zulässt und das bei einer Anwendung im Kraftfahrzeug fahrzeugeigene Hardwareressourcen schont und eine erstklassige Informationsdarstellung erlaubt.

Erfindungsgemäß wird die Aufgabe dadurch gelöst, dass der Computer, die Eingabeeinheit und das Display eine der Instrumententafel entnehmbare, separate Einheit bilden, welche unter einem wegklappbaren Tachometer in die Instrumententafel eingesetzt ist.

Die Erfindung hat den Vorteil, dass die entnehmbare Einheit aus dem Computer, der Eingabeeinheit und dem Display für verschiedene Anwendungen eingesetzt werden kann. Bei der Anwendung in der Instrumententafel des Kraftfahrzeugs wird durch den Computer die bordeigene Elektronik entlastet und es werden Rechenleistungen ermöglicht, die mit den relativ einfachen Bordrechnern nicht erreicht werden.

Bei einer Weiterbildung sind der Computer, die Eingabeeinheit und das Display als handelsüblicher Laptop ausgebildet. Durch die Ausbildung des Computers, der Eingabeeinheit und des Displays als Laptop, wird es zum einen möglich außerhalb der Nutzung des Systems in der Instrumententafel zum Beispiel Office-Aufgaben mit dem Laptop zu erledigen. In der Instrumententafel ermöglicht der Laptop eine hervorragende Darstellung von nicht primären Fahrerinformationen. Das große und farbige Display eines Laptops übertrifft die nach dem Stand der Technik in Kraftfahrzeugen bekannten Darstellungsergebnisse wesentlich. Die sekundären Fahrerinformationen können wie auf einem üblichen Desktop den Wünschen des Nutzers entsprechend positioniert werden und in der Darstellungsgröße verändert werden.

Darüber hinaus ist es vorteilhaft, wenn der Computer innerhalb der Instrumententafel mit den Signalen der Kraftfahrzeugsensoren versorgt wird und zusammen mit der Eingabeeinheit und dem Display als Navigationssystem nutzbar ist. Das Display eines Laptops ist wesentlich größer als das Display bekannter Navigationssysteme, wodurch die Darstellungsqualität der Navigationsinformationen sehr verbessert wird. Die Rechenleistung eines modernen Laptops reicht vollkommen aus um eine schnelle und genaue Navigation zu ermöglichen. Damit lässt sich mit dem Computer, der Eingabeeinheit und dem Display im Fahrzeug ein sehr hochwertiges Navigationssystem bei vergleichsweise geringen Kosten realisieren.

Bei einer weiteren Ausgestaltung weist der Tachometer Einrast- und Sicherungsmittel auf, welche die Einheit aus Computer, Eingabeeinheit und Display sicher und fest in der gewünschten Position in der Instrumententafel halten. Dazu können die Einrast- und Sicherungsmittel eine zweite elektrische Schnittstelle vom Computer zur übrigen Fahrzeugelektronik bilden. Beim Einsetzten des Computers in die Instrumententafel wird gleichzeitig mit der Verriegelung durch die Einrast- und Sicherungsmittel die notwendige elektrische Verbindung zur übrigen Fahrzeugelektronik und den Sensoren im Fahrzeug hergestellt.

Bei einer vorteilhaften Ausführungsform weist die Instrumententafel eine erste elektrische Schnittstelle zur Verbindung des Computers mit der übrigen Fahrzeugelektronik auf. Auch diese Schnittstelle ermöglicht mit dem Einsetzen des Computers in die Instrumententafel eine elektrische Verbindung des Computers mit der Fahrzeugelektronik. Hierzu ist am Computer in einer bestimmten Position ein elektrisches Verbindungselement ausgebildet, das sein Gegenstück in adäquater Position in der Instrumententafel findet.

Bei einer Weiterbildung ist zwischen der Instrumententafel und dem Tachometer einen Klappmechanismus ausgebildet, mit dessen Hilfe der Tachometer von dem Computer, der Eingabeeinheit und dem Display wegklappbar ist. Durch einen solchen Klappmechanismus lässt sich die Einheit aus dem Computer, der Eingabeeinheit und dem Display leicht und komfortabel der Instrumententafel entnehmen und wieder in diese einsetzten.

Bei einer vorteilhaften Ausgestaltung werden im Tachometer ausschließlich primäre Informationen dargestellt. Hierzu wird zum Beispiel die Fahrzeuggeschwindigkeit von einem Sensor erfasst und mittels einer im Fahrzeug vorhandenen elektronischen Schaltung verarbeitet. Das so erzeugte, zur Fahrzeuggeschwindigkeit proportionale Signal wird dem Fahrzeugführer unter Verwendung eines einfachen Kreuzspulenmesswerkes im Tachometer angezeigt. Hierdurch wird sicher gestellt, dass das Fahrzeug auch ohne die Einheit aus dem Computer, der Eingabeeinheit und dem Display benutzbar ist. Zu der primären Information gehört in erster Linie die Fahrzeuggeschwindigkeit, da ohne diese Information das Fahrzeug im öffentlichen Verkehrsraum nicht benutzt werden darf. Darüber hinaus zählt man auch einfache Warninformationen zum Beispiel über einen zu geringen Ölstand, eine zu geringe Kraftstoffmenge im Kraftstofftank oder einen überhitzen Kühlkreislauf zur primären Information.

Die Erfindung lässt zahlreiche Ausführungsformen zu. Ein Beispiel sollen anhand der in den Zeichnungen dargestellten Figuren erläutert werden. Diese zeigen in
- Figur 1:: eine seitliche Darstellung der Instrumententafel eines Kraftfahrzeugs,
- Figur 2:: eine perspektivische Darstellung der Instrumententafel eines Kraftfahrzeugs,
- Figur 3:: die Instrumententafel mit weggeklapptem Tachometer.

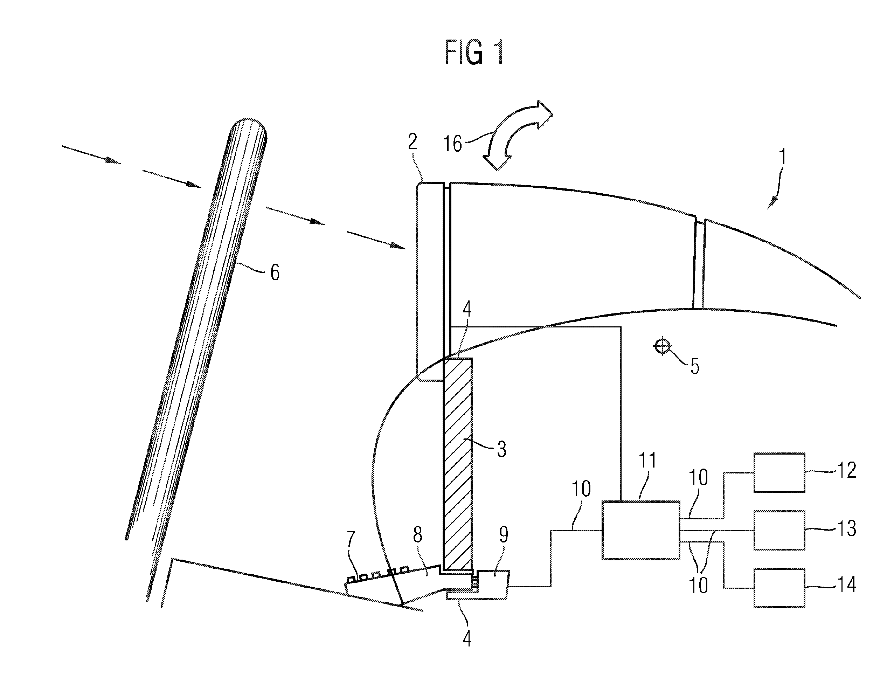

Fig. 1 zeigt die Instrumententafel 1 eines hier nicht dargestellten Kraftfahrzeugs. Zu erkennen ist der Tachometer 2 und ein Lenkrad 6. Nach dem Stand der Technik wird dem Fahrer im Tachometer 2 eine zunehmende Anzahl von Informationen angezeigt. Neben der primären Information, die unmittelbar notwendig ist, um das Kraftfahrzeug sicher zu führen, werden nach dem Stand der Technik im Tachometer 2 zum Beispiel auch Informationen aus dem Navigationssystem angezeigt. Die Vielzahl der angezeigten Informationen in dem kleinen Tachometerfeld führt zu einer unübersichtlichen und schlecht ablesbaren Darstellung der Information.

Daher sollte im Tachometer 2 nur die primär benötigte Information angezeigt werden. Sekundäre Informationen wie zum Beispiel die genaue Kühlwassertemperatur, der Tankinhalt, die mit dem Restkraftstoff noch zurücklegbare Fahrstrecke, der momentane Verbrauch oder auch Informationen über die Fahrtroute werden im Display 3 des Computers 8 angezeigt. Der Computer 8 mit der Eingabeeinheit 7 und dem Display 3 ist als handelsüblicher Laptop ausgebildet. Über die Eingabeeinheit 7, die zum Beispiel eine Tastatur und ein Trackball umfasst, können die zur Navigation des Fahrzeuges notwendigen Informationen leicht und sicher eingegeben werden. Die Versorgung des Fahrzeugführers mit sekundärer Information erfolgt über das hochwertige Display 3 des Laptops, wodurch beispielsweise die vom Navigationssystem errechnete Streckenführung hervorragend dargestellt werden kann.

Die Einheit aus Computer 8, Eingabeeinheit 7 und Display 3 ist in der Instrumententafel 1 unter einem wegklappbaren Tachometer 2 platziert. Der Computer 8, die Eingabeeinheit 7 und das Display 3 werden von Einrast- und Sicherungsmitteln 4 fest in ihrer Position gehalten. Eine erste elektronische Schnittstelle 9 gewährleistet über die Elektroleitungen 10 die elektrische Verbindung des Computers 8 mit anderen Bauteilen der Fahrzeugelektronik 11. Über weitere elektrische Leitungen 10 ist die Fahrzeugelektronik 11 mit den Sensoren 12, 13, 14 verbunden. Die von den Sensoren 12, 13 und 14 erfassten Messwerte werden an die Fahrzeugelektronik 11 weitergegeben, dort entsprechend verarbeitet und dann zur Berechnung von Fahrstrecken, Fahrtrouten und anderer Informationen an den Computer 8 geleitet. Die hohe Rechenleistung des Computers 8 entlastet die Fahrzeugelektronik 11 erheblich. Die Fahrzeugelektronik 11 kann daher entsprechend leistungsschwach dimensioniert sein oder für andere Aufgaben genutzt werden.

Primäre Fahrerinformationen, wie zum Beispiel die Fahrzeuggeschwindigkeit, werden direkt über eine elektrische Leitung 17 an den Tachometer 2 übertragen und dort mit Hilfe eines einfachen Kreuzspulenmesswerkes angezeigt. Sekundäre Informationen hingegen werden über die elektrischen Leitungen 10 und die Schnittstelle 9 an den Computer 8 weitergeleitet und dort soweit verarbeitet, dass sie im Display 3 mit hoher Qualität angezeigt werden können.

Um die Einheit aus Computer 8, Eingabeeinheit 7 und Display aus der Instrumententafel 1 zu entnehmen, wird der Tachometer 2 mit Hilfe des Klappmechanismus 5 weggeklappt, wodurch der Computer 8, die Eingabeeinheit 7 und das Display 3 freigegeben werden. Die Wegklappbarkeit des Tachometers 2 wird durch den Pfeil 16 angedeutet. Wenn die Einheit aus dem Computer 8, der Eingabeeinheit 7 und dem Display 3 der Instrumententafel 1 entnommen wurde, ist es möglich, mit dem Computer 8 der Eingabeeinheit 7 und dem Display 3 übliche Office-Aufgaben außerhalb des Kraftfahrzeuges zu bearbeiten. Das Kraftfahrzeug ist auch ohne die Einheit aus Computer 8, Eingabeeinheit 7 und Display 3 voll funktionsfähig, da alle primär benötigten Fahrerinformationen im Tachometer 2 angezeigt werden.

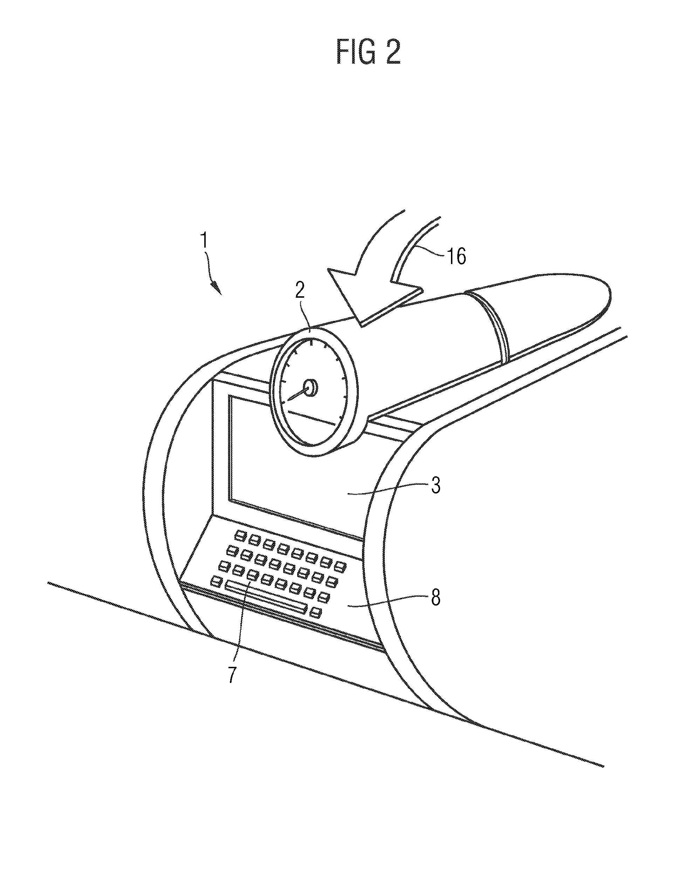

Der in Fig. 1 dargestellte Aufbau wird in Fig. 2 aus einer anderen Perspektive gezeigt. Auch in Fig. 2 ist die Instrumententafel 1, der Tachometer 2, das Display 3, die Eingabeeinheit 7 und der Computer 8 dargestellt. Der Computer 8, die Eingabeeinheit 7 und das Display 3 sind unter dem Tachometer 2 in der Instrumententafel 1 angeordnet. Das Display 3 ist mit dem heruntergeklappten Tachometer 2 verrastet.

Der Tachometer 2, das Display 3, die Eingabeeinheit 7 und der Computer 8 müssen nicht zwangsläufig auf der Fahrerseite in der Instrumententafel 1 angeordnet sein, sondern können auch, wie hier dargestellt, in der Mitte der Instrumententafel 1 angeordnet sein. Hierdurch haben sowohl der Fahrer als auch der Beifahrer einen guten Blickkontakt zu dem Tachometer 2 und dem Display 3. Sowohl der Fahrer als auch der Beifahrer kann über die Eingabeeinheit 7 Informationen an den Computer 8 weitergeben, in dem zum Beispiel der Beifahrer den Zielort der Fahrt auf der Tastatur eintippt. Auch in Fig. 2 wird durch den Pfeil 16 die Wegklappbarkeit des Tachometers 2 angedeutet. Wenn der Tachometer 2 weggeklappt ist, kann die Einheit aus dem Computer 8, der Eingabeeinheit 7 und dem Display 3 der Instrumententafel 1 entnommen werden und für andersartige Zwecke außerhalb des Kraftfahrzeuges eingesetzt werden. Da ein moderner Laptopcomputer mit elektronischen Speichermedien ausgerüstet ist, die sehr große Datenmengen aufnehmen, können auf dem Speicher des Computers einen Vielzahl von Programmen abgelegt sein. Hier sind die Programme zu Lösung von kraftfahrzeugspezifischen Aufgaben, wie etwas das Fahrzeugnavigationsprogramm, genauso speicherbar, wie zum Beispiel Officeprogramme, die keine fahrzeugtypischen Anwendungen darstellen.

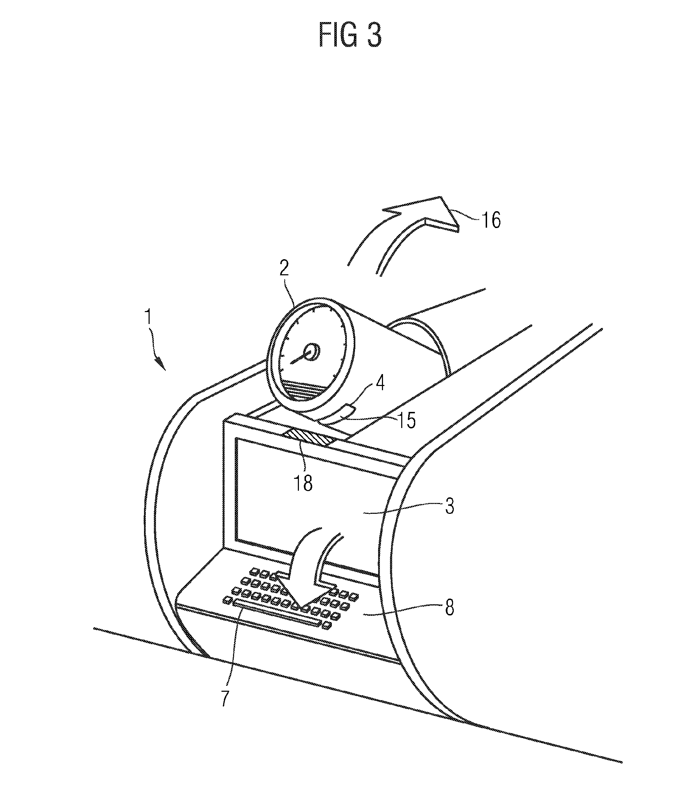

Die Entnahme der Einheit aus dem Computer 8, der Eingabeeinheit 7 und dem Display 3 aus der Instrumententafel wird in Fig. 3 näher dargestellt. Fig. 3 zeigt die Anordnung des Tachometers 2, des Displays 3, der Eingabeeinheit 7 und des Computers 8 in der Mitte der Instrumententafel 1. Hier jedoch sieht man den Tachometer 2 in aufgeklapptem Zustand, wodurch die Einrast- und Sicherungsmittel 4, sowie die zweite elektronische Schnittstelle 15 und die Schnittstelle 18 am Laptop gut sichtbar werden. Das Display 3 kann nun, wie bei Laptops üblich, nach vorne geklappt werden und die Einheit aus Display 3, Eingabeeinheit 7 und Computer 8 kann der Instrumententafel 1 entnommen werden. Wenn der Laptop der Instrumententafel 1 entnommen wurde, kann der Tachometer 2 zurückgeklappt werden und das Fahrzeug ist weiterhin voll einsatzfähig, da im Tachometer 2 alle primären Informationen, wie beispielsweise die Fahrzeuggeschwindigkeit, weiterhin angezeigt werden.

Der entnommene Laptop ist nun für anderweitige Aufgaben außerhalb des Kraftfahrzeuges verwendbar. Es ist möglich eine Reiseplanung außerhalb des Fahrzeuges vorzunehmen und dabei alle Informationen für das Navigationssystem einzugeben. Nachdem der Laptop erneut in die Instrumententafel 1 eingesetzt wurde, kann mit den aktuellen Positionsdaten des Kraftfahrzeuges eine Navigation gestartet werden. Darüber hinaus ist es denkbar, den Laptop nicht nur in einem einzigen Fahrzeug zu betreiben. Bei einem Fahrzeugwechsel, zum Beispiel zu einem Mietwagen, kann der Laptop auch in dem nächsten Fahrzeugen benutzt werden, soweit dieses für eine solche Nutzung vorbereitet ist.

## Patentansprüche

1. Elektronisches Fahrerinformationssystem in der Instrumententafel (1) eines Kraftfahrzeugs zur Anzeige einer Vielzahl, nicht primärer Informationen mit einem Computer (8), einer Eingabeeinheit (7) und einem Display (3) **dadurch gekennzeichnet, dass** der Computer (8), die Eingabeeinheit (7) und das Display (3) eine der Instrumententafel (1) entnehmbare, separate Einheit bilden, welche in eine Ausnehmung unter einem wegklappbaren Tachometer (2) in die Instrumententafel (1) eingesetzt ist.

2. Elektronisches Fahrerinformationssystem nach Anspruch 1 **dadurch gekennzeichnet, dass** der Computer (8), die Eingabeeinheit (7) und das Display (3) als handelsüblicher Laptop ausgebildet sind.

3. Elektronisches Fahrerinformationssystem nach Anspruch 1 oder 2 **dadurch gekennzeichnet, dass** der Computer (8) innerhalb der Instrumententafel (1) mit den Signalen der Kraftfahrzeugsensoren (12, 13, 14) versorgt wird und zusammen mit der Eingabeeinheit (7) und dem Display (3) als Navigationssystem nutzbar ist.

4. Elektronisches Fahrerinformationssystem nach Anspruch 1 **dadurch gekennzeichnet, dass** der Tachometer (2) Einrast- und Sicherungsmittel (4) aufweist, welche die Einheit aus Computer (8), Eingabeeinheit (7) und Display (3) sicher und fest in der gewünschten Position in der Instrumententafel (1) halten.

5. Elektronisches Fahrerinformationssystem nach Anspruch 4 **dadurch gekennzeichnet, dass** die Einrast- und Sicherungsmittel (4) eine zweite elektrische Schnittstelle (15) vom Computer (8) zur fest im Fahrzeug installierten Elektronik (11) beinhalten.

6. Elektronisches Fahrerinformationssystem nach Anspruch 1 **dadurch gekennzeichnet, dass** die Instrumententafel (1) eine erste elektrische Schnittstelle (9) zur Verbindung des Computers (8) mit der übrigen Fahrzeugelektronik (11) aufweist.

7. Elektronisches Fahrerinformationssystem nach Anspruch 1 **dadurch gekennzeichnet, dass** zwischen der Instrumententafel (1) und dem Tachometer (2) einen Klappmechanismus (5) ausgebildet ist, mit dessen Hilfe der Tachometer (2) von dem Computer (8), der Eingabeeinheit (7) und dem Display (3) wegklappbar ist.

8. Elektronisches Fahrerinformationssystem nach Anspruch 1 **dadurch gekennzeichnet, dass** im Tachometer (2) ausschließlich primäre Informationen dargestellt werden.
